Europäisches Patentamt

(19) European Patent Office

Office européen des brevets

(11) Numéro de publication: **0 099 083**
**B1**

(12) **FASCICULE DE BREVET EUROPEEN**

(45) Date de publication du fascicule du brevet: **19.11.87**

(51) Int. Cl.⁴: **B 60 T 1/10, F 16 D 61/00**

(21) Numéro de dépôt: **83106727.7**

(22) Date de dépôt: **08.07.83**

(54) **Réservoir d'énergie oléopneumatique pour l'accumulation de l'énergie de freinage récupérée sur un véhicule.**

(30) Priorité: **16.07.82 FR 8212517**

(43) Date de publication de la demande:
**25.01.84 Bulletin 84/04**

(45) Mention de la délivrance du brevet:
**19.11.87 Bulletin 87/47**

(84) Etats contractants désignés:
**BE DE GB IT SE**

(56) Documents cités:
**FR-A-2 188 574**
**FR-A-2 323 067**
**FR-A-2 425 609**
**US-A-1 891 644**

(73) Titulaire: **RENAULT VEHICULES INDUSTRIELS**
**Société Anonyme dite:**
**129 rue Servient "La Part Dieu"**
**F-69003 Lyon (FR)**

(72) Inventeur: **Michel, Robert**
**12 Rue de la Jonquière**
**F-75017 Paris (FR)**

(74) Mandataire: **Casalonga, Alain et al**
**BUREAU D.A. CASALONGA OFFICE JOSSE &**
**PETIT Morassistrasse 8**
**D-8000 München 5 (DE)**

Courier Press, Leamington Spa, England.

## Description

L'invention concerne essentiellement la récupération de l'énergie de freinage sur les véhicules, en particulier sur les véhicules urbains appelés à s'arrêter fréquemment, comme les autobus ou les véhicules de livraisons.

Lors d'une telle récupération, l'énergie récupérée est habituellement accumulée sur des accumulateurs à volant d'inertie, sur des batteries électrochimiques, ou encore plus récemment sur des accumulateurs oléopneumatiques.

Pour cette acumulation d'énergie on porrait songer à utiliser simplement des réservoirs à air comprimé comme on en utilise pour le système de freinage de sécurité type Westinghouse sur tous les trains du monde (voir brevet US A—1 891 644), avec l'intérêt évident de fonctionner en circuit ouvert sans nécessiter de canalisation de retour et sans craindre aucune fuite de fluide. Cependant cette solution n'est pas evisageable pour une récupération d'énergie de freinage étant donné que la technologie actuelle ne permet pas de réalise des compresseurs d'air de haute pression et de haut rendement.

Au contraire l'accumulation oléopneumatique est de beaucoup préférable car on sait fabriquer des compresseurs d'huile de très haut rendement, et en outre elle est particulièrement intéressante lorsqu'elle est utilisée sur un véhicule utilisant déjà une transmission hydro-cinétique continue entre son moteur thermique et les roues, les mêmes machines hydrauliques réversibles pouvant servir egalement au freinage en récupérant l'énergie sous la forme d'une pression d'huile.

Parmi les accumulateurs oléopneumatiques, le plus simple, comme décrit dans le brevet FR—A—2 323 067, (correspondant au préambule de la revendication 1) est d'utiliser un simple réservoir vertical, à la base duquel on injecte de l'huile sous pression qui comprime l'air du reservoir, sans séparation entre les deux. Dans l'hypothèse où l'air du réservoir est à la pression atmosphérique lorsque le réservoir ne contient pas d'huile, la pression d'huile obtenue dans le réservoir va varier en continu de cette pression atmosphérique jusqu'à une pression élevée en passant par tous les intermédiaires, ce qui conduit à une pression d'utilisation extrêmement variable et relativement faible en moyenne, donc dans des conditions défavorables pour l'utilisation. Si au contraire on maintient une pression d'air déjà élevée au départ, on travaille dans des conditions beaucoup plus favorables avec une faible variation relative et une moyenne élevée, mais alors lorsque l'utilisation a épuisé l'huile du réservoir, c'est l'air qui se progage dans les canalisations et les machines hydrauliques avec des conséquences catastrophiques pour le fonctionnement.

Pour remédier à cet état de fait, il est connu d'interposer entre l'air comprimé et l'huile, soit un piston (voir brevet FR—A-2 188 574) ou une membrane agencée avec un dispositif que empêche la sortie d'air lorsque l'huile est évacuée.

Parmi les accumulateurs oléopneumatiques de ce type à membrane, le plus perfectionné est l'accumulateur Leduc, décrit dans le brevet FR—A—2 505 417.

Cet accumulateur est constitué essentiellement par un corps tubulaire, avec une extrémité de raccordement hydraulique et une autre extrémité de charge pneumatique, un tirant axial préchargé tendu entre les deux extrémités, et une vessie tubulaire entourant ce tirant et se raccordant de manière étanche avec lui et avec la paroi tubulaire du côté de l'extrémité pneumatique. Cette conception présente l'avantage de simplifier la fabrication, et surtout d'apporter une grande sécurité en empêchant positivement tout éclatement de l'enveloppe, un excès de pression, au-delà de la valeur préchargée pour la tension du tirant, se traduisant automatiquement par un échappement de l'excédent de pression.

Toutefois pour l'application particulière envisagée de la récupération de l'énergie de freinage d'un véhicule, la capacité d'accumulation nécessaire conduit avec ce type d'accumulateur à une dimension difficile à réaliser, et surtout à un volume et une forme très difficiles à loger à bord d'un véhicule, ce dernier devant comporter en outre la réserve d'huile à basse pression et le dispositif de récuperation des fuites éventuelles. Si l'on scinde l'accumulateur en plusieurs accumulateurs de plus faible capacité, les difficultés d'installation s'en trouvent encord accrues.

Le but de l'invention est d'eliminer les inconvénients précédents en réalisant un ensemble unique d'une forme plate plus facilement logeable à bord d'un véhicule, soit sous le plancher, soit sur le pavillon du véhicule, et combinant toutes les fonctions de réserve basse pression, d'accumulation hydraulique et de récupération de fuites, de manière que l'ensemble soit beaucoup plus facile et économique à installer sur un véhicule de série et à adapter à divers types de véhicules.

Ce but est réalisé par les caractéristiques de la revendication.

L'invention consiste essentiellement à grouper plusieurs éléments accumulateurs oléopneumatiques cylindriques allongés de type connu placés côte à côte à l'interieur d'une enveloppe unique ayant sensiblement la longueur des éléments, une largeur moyenne et une faible hauteur, les éléments accumulateurs haute pression étant raccordés en parallèle pour constituer un accumulateur haute pression unique, tandis que l'intervalle entre ceux-ci et l'enveloppe constitue un accumulateur basse pression, les accumulateurs haute pression étant par ailleurs suspendus dans l'enveloppe par leur bouche et leur queue, tandis que l'enveloppe unique réunissant les embouts de raccordement hydrauliques est constituée en un ensemble auto-porteur monté sur silent-blocks pour pouvoir être installé facilement sur une surface horizontale du véhicule, en particulier sur le pavillon de celui-ci, sans nécessiter d'autres transformations que la pose des canalisations de jonction.

La partie réservoir basse pression peut être à l'air libre ou à faible pression sans membrane de séparation, et en particulier la disposition sur le pavillon permet tout naturellement d'alimenter en charge la pompe de gavage de la transmission-récupération.

D'autres particularités de l'invention apparaîtront dans la description qui va suivre d'un mode de réalisation pris comme exemple et représenté sur le dessin annexé, sur lequel:

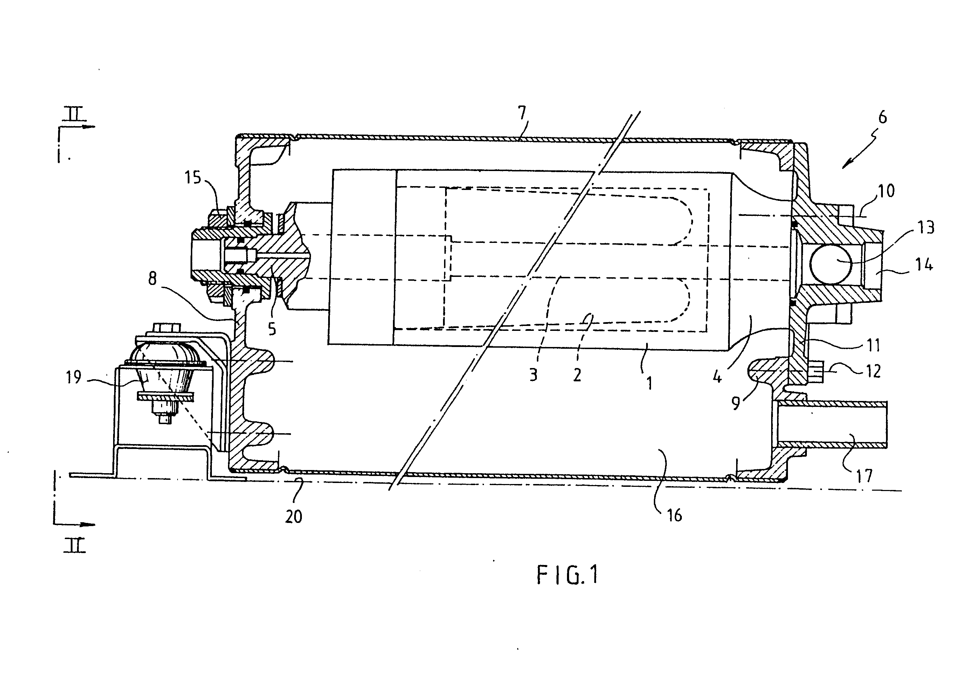

la fig. 1 est une coupe longitudinale de l'ensemble;

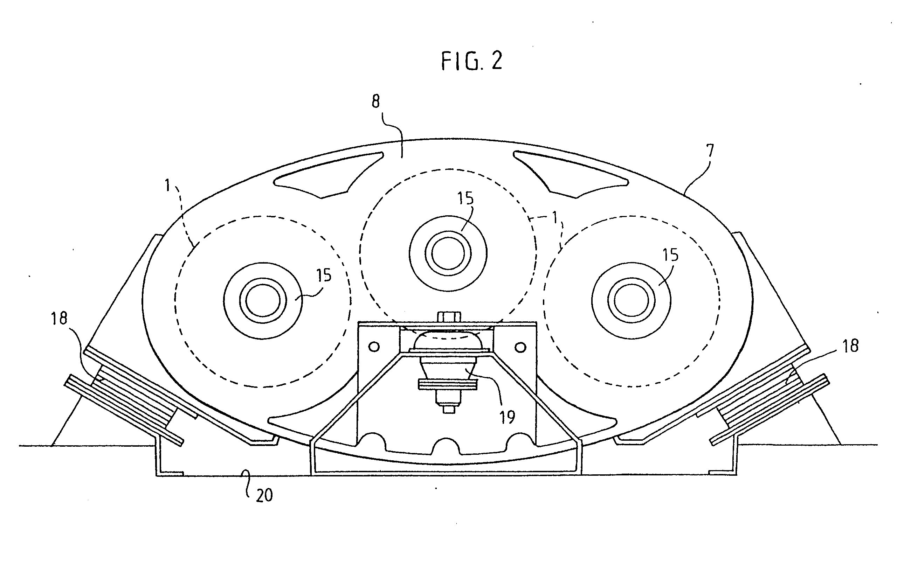

la fig. 2 est une vue en bout selon II—II de la fig. 1; et

la fig. 3 est un schéma de raccordement hydraulique.

Dans l'exemple particulier de réalisation, on utilise trois éléments accumulateurs haute pression 1 précontraints du type Leduc, avec une vessie intérieure tubulaire 2 entourant un tirant central 3 qui va de la bouche de raccordement hydraulique 4 à la queue 5 munie d'un bouchon de gonflage et de contrôle de la pression intérieure d'azote.

Ces trois accumulateurs 1 ont une grande lon-gueur, d'environ 2 m, et un faible diamètre, et conformément à l'invention, ils sont placés côte à côte à l'intérieur d'une enveloppe unique 6 constituée par une virole 7 en tôle d'acier, de section sensiblement ovale, refermée par deux flasques d'extrémité 8 et 9, par exemple en fonte d'aluminium, qui sont soudés sur la virole 7.

Pour permettre la mise en place et le démontage des divers accumulateurs 1, les trois accumulateurs sont fixés au moyen de vis 10 sur un couvercle unique 11 se fixant lui-même à l'aide de vis 12 sur le flasque arrière 9, ce couvercle unique 11 constituant en même temps le collecteur de raccordement en parallèle des trois bouches 4 à l'aide de conduits transversaux 13 vers l'embout de raccordement haute pression unique 14.

A l'autre extrémité, la queue 5 de chaque accumulateur 1 s'introduit de manière étanche dans un embout 15 fixé sur le flasque avant 8 et permettant d'accéder à l'embout de gonflage et de contrôle non représenté.

Conformément à l'invention, l'espace 16 compris entre l'enveloppe 7 et les trois accumulateurs haute pression 1 constitue l'accumulateur à basse pression communiquant avec l'embout de raccordement à basse pression 17.

Les divers accumulateurs haute pression 1 étant ainsi rigidement fixés et suspendus par leurs deux extrémités dans l'enveloppe 6, celle-ci constitue un ensemble rigide auto-porteur qui est en outre monté sur trois silent blocks dont deux latéraux 18 proches du flasque arrière 9, et un d'extrémité 19 situé au centre, devant le flasque avant 8.

L'ensemble compact ainsi constitué, dont la longueur est un peu supérieure à 2 m, la largeur à 0,78 m et la hauteur à 0,43 m, et dont le poids en ordre de marche est d'environ 700 kg, peut être fixé d'un bloc en un emplacement quelconque du véhicule, mais de préférence sur le pavillon 20 du véhicule dans le cas d'un autobus ou d'un fourgon tôlé. La transformation du véhicule se limite donc à la pose des deux canalisations partant des embouts 14 et 17 pour rejoindre les dispositifs hydrostatiques de la transmission récupération.

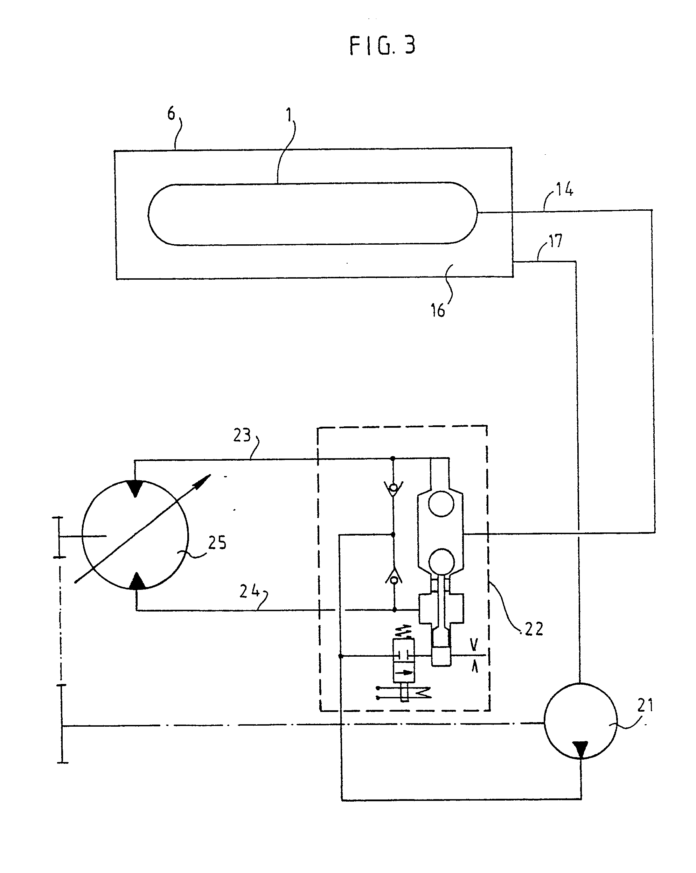

A titre d'exemple, comme représenté sur la fig. 3, la canalisation basse pression 17 alimente la pompe de gavage 21 située au niveau inférieur du véhicule, de sorte que la mise en charge de cette canalisation, du fait de la position sur le pavillon 20 du véhicule, est particulièrement favorable. La conduite haute pression 14 est connectée à une boîte à clapets 22 qui assure le raccordement alternatif avec l'une ou l'autre des entrée/sortie 23 et 24 d'une machine hydraulique 25 de récupération-restitution d'énergie raccordée sur la transmission. Ceci dans le cas où la machine 25 est d'un type sans inversion de cylindrée (ou "deux cadrans"). Une telle boîte à clapet 22 peut s'avérer inutile si l'on utilise au contraire pour la machine 25 une machine avec inversion de cylindrée (ou "quatre cadrans").

En outre, la machine hydraulique 25 de récupération-restitution elle-même est remplacée par d'autres machines si l'on utilise la disposition décrite par ailleurs dans la demande de brevet français 82 08 855 (FR—A—2527288) au nom de la demanderesse.

Dans tous les cas, et en particulier lors de l'installation sur le pavillon du véhicule, le réservoir basse pression 16 peut être ouvert à l'air libre à l'aide d'un reniflard ou encore être maintenu sous basse pression mais sans nécessiter de membrane de séparation air/huile.

Naturellement, tout autre type d'accumulateur haute pression 1 que le type Leduc pris comme exemple pourrait être utilisé, par exemple un accumulateur non précontraint à vessie intérieure, la suspension continuant à être assurée à l'arrière par la bouche et du côté avant par tout moyen approprié, éventuellement par une cuvette fixée sur le flasque avant 8 du côté intérieur et dans laquelle vient se centrer le corps du réservoir 1.

En plus du côté compact, préassemblé et auto-porteur de l'ensemble de réservoirs selon l'invention, celui-ci peut avoir des dimensions et une capacité standard convenant à un grand nombre de types de véhicules, mais il est également possible de prévoir différentes valeurs de capacité en modifiant seulement la longueur de l'enveloppe 7 ainsi que des réservoirs 1, donc sans grande modification des standards et des outillages. Une autre adaptation de la capacité consiste simplement à supprimer certains des accumulateurs 1 pour en modifier le nombre.

**Revendications**

1. Réservoir d'énergie oléopneumatique pour l'accumulation de l'énergie de freinage récupérée sur un véhicule à l'aide d'un dispositif hydrostatique de récupération-restitution d'énergie, combiné ou non avec la transmission du véhicule et travaillant entre un dispositif d'accumulateur oléopneumatique (1) à haute pression et un réservoir à basse pression (16), caractérisé par le fait —que ledit dispositif d'accumulateur consiste en plusieurs accumulateurs oléopneumatiques (1) cylindriques allongés, raccordés hydrauliquement en parallèle et disposés horizontalement côte à côte dans une enveloppe unique (6) de faible hauteur,

—que l'espace compris entre ladite enveloppe (6) et lesdits accumulateurs (1) constitue ledit réservoir à basse pression (16),

—que chaque accumulateur oléopneumatique (1) est du type comportant un corps tubulaire, une extrémité hydraulique (4) avec un embout de raccordement hydraulique, une extrémité pneumatique (5) avec un embout de chargement pneumatique et de contrôle de pression, un tirant axial (3) préchargé tendu entre ces deux extrémités (4,5), et une vessie tubulaire (2) entourant ce tirant (3) et se raccordant de manière étanche sur lui et sur le corps tubulaire du côté de l'extrémité pneumatique (5),

—que l'enveloppe (6) comporte une plaque avant (9) et une plaque arrière (8), ladite plaque avant (9) étant munie d'une ouverture d'une dimension suffisante pour permettre la libre introduction et l'extraction simultanée de tous les accoumulateurs oléopneumatiques (1), et

—que lesdits accumulateurs oléopneumatiques (1) sont tous connectés, chacun par ledit embout de son extrémité hydraulique (4), à une pièce unique (11) constituant tout à la fois un collecteur (13) pour réunir mécaniquement et hydrauliquement toutes les extrémités hydrauliques (4) en parallèle sur une canalisation commune (14) d'entrée-sortie à haute pression, et un couvercle pour fermer ladite ouverture de la plaque avant (9) de l'enveloppe.

2. Réservoir d'énergie selon la revendication 1, caractérisé par le fait que chacune desdites extrémités pneumatiques (5) des accumulateurs oléopneumatiques (1) se prolonge par une queue cylindrique, et que ladite plaque arrière (8) de l'enveloppe (6) comporte des trous cylindriques recevant et supportant chacun de manière coulissante une des queues cylindriques.

3. Réservoir d'énergie selon la revendication 2, caractérisé par le fait que ledit embout de chargement pneumatique et de contrôle de pression de chacune des extrémités pneumatiques (5) est située dans l'axe de ladite queue cylindrique, et que chacun desdits trous cylindriques de la plaque arrière (8) est un trou passant, la queue ou le trou comportant un joint annulaire d'étanchéité.

4. Réservoir d'énergie selon une des revendications précédentes, caractérisé par le fait qu'il est agencé en ensemble autoporteur monté sur des silents blocs (18,19) permettant son implantation facile sur la structure d'un véhicule.

**Patentansprüche**

1. Ölpneumatischer Energiespeicher zur Speicherung der in einem Fahrzeug zurückgewonnenen Bremsenergie mittels einer hydrostatischen Energierückgewinnungs- und Rückstellvorrichtung, die gegebenfalls mit dem Antrieb des Fahrzeugs verbunden ist und zwischen einer ölpneumatischen Hockdruckspeichervorrichtung (1) und einem Niederdruckspeicher (16) arbeitet, dadurch gekennzeichnet, dass

—diese Speichervorrichtung aus mehreren langzylindrischen ölpneumatischen Speichern (1) besteht, die hydraulisch parallel verbunden und horizontal nebeneinanderin einem einzigen Gehäuse (6) geringer Höheangeordnet sind,

—dass der Raum zwischendiesem Gehäuse (6) und jenen Speichern (1) als besagter Niederdruckspeicher (16) dient,

—dass jeder ölpneumatische Speicher (1) solcher Art ist, die aus einem rohrförmigen Körper, einem hydraulischen Ende (4) mit hydraulischem Anschluss, einem pneumatischen Ende (5) mit pneumatischen Lade- und Druckregelungsanschluss, einer vorgespannten axialen Zugstange (3) zwischen diesen beiden Enden (4,5) und einer Schlauchblase (2), die diese Zugstange (3) umgibt und sich dicht an diese und auf der Seite des pneumatischen Endes (5) an den rohrförmigen Körper anlegt, besteht,

—dass das Gehäuse (6) eine Vorderplatte (9) und eine Hinterplatte (8) umfasst, wobei diese Vorderplatte (9) eine genügend grosse Öffnung enthält, um freien gleichzeitigen Ein- und Ausbau sämtlicher ölpneumatischer Speicher (1) zugestatten, und

dass alle diese ölpneumatischen Speicher (1) jeweils mittels besagten Anschlusses am hydraulischen Ende (4) mit einem einzigen Glied (11) verbunden sind, das sowohl einen Kollektor (13) zur mechanischen und hydraulischen Parallelverbindung aller hydraulischen Enden (4) mit einem gemeinsamen Hochdruckein- und -auslassrohr (14) als auch einen Deckel zum Schliessen jener Öffnung in der Vorderplatte (9) des Gehäuses darstellt.

2. Energiespeicher nach Anspruch 1, dadurch gekennzeichnet, dass alle besagten pneumatischen Enden (5) der ölpneumatischen Speicher (1) durch einen zylindrischen Ansatz verlängert sind und dass jene Hinterplatte (8) des Gehäuses (6) zylindrische Bohrungen aufweist, die je einen der zylindrischen Ansätze gleitend aufnehmen und abstützen.

3. Energiespeicher nach Anspruch 2, dadurch gekennzeichnet, dass jener pneumatische Lade- und Druckregelungs anschluss aller pneumatischen Enden (5) jeweils in der Achse des besagten zylindrischen Ansatzes angeordnet ist und dass jene zylindrischen Bohrungen in der Hinterplatte (8) jeweils durchgehend sin, wobei der Ansatz oder die Bohrung mit einem Dichtungsring versehen ist.

4. Energiespeicher nach einem der vorhergehenden Ansprüche, dadurch gekennzeichnet, dass er als selbsttragender Aufbau auf Gummilagern (18,19) angeordnet ist, so dass er leicht in eine Fahrzeugkonstruktion eingebaut werden kann.

**Claims**

1. Oleopneumatic energy reservoir for the accumulation of the braking energy recuperated in a vehicle with the aid of a hydrostatic energy recuperation and restitution device, which may or may not be combined with the transmission of the vehicle and which works between a high-pressure oleopneumatic accumulator device (1) and a low-pressure reservoir (16), characterized by the fact that:

—said accumulator device consists of a plurality of elongate cylindrical oleopneumatic accumulators (1) hydraulically connected in parallel and disposed horizontally side by side in a single casing (6) of slight height,

—that the space existing between said casing (6) and said accumulators (1) constitutes said low-pressure reservoir (16),

—that each oleopneumatic accumulator (1) is of the type comprising a tubular body, a hydraulic end (4) with a hydraulic connector, a pneumatic end (5) with a pneumatic charging and pressure control connector, a preloaded axial tie rod (3) stretched between these two ends (4,5), and a tubular bladder (2) surrounding said tie rod (3) and sealingly connected to it and to the tubular body on the pneumatic end (5) side,

—that the casing (6) comprises a front plate (9) and a rear plate (8), said front plate (9) being provided with an opening whose dimensions are sufficient to permit the free simultaneous introduction and extraction of all the oleopneumatic accumulators (1), and

—that said oleopneumatic accumulators (1) are all connected, each by said connector of its hydraulic end (4), to a single member (11) constituting both a collector (13) for mechanically and hydraulically connecting all the hydraulic ends (4) in parallel to a common high-pressure inlet and outlet pipe (14), and a cover for closing said opening of the front plate (9) of the casing.

2. Energy reservoir according to Claim 1, characterized by the fact that each of said pneumatic ends (5) of the oleopneumatic accumulators (1) is extended by a cylindrical tail and that said rear plate (8) of the casing (6) is provided with cylindrical holes, each of which receives and slidingly supports one of the cylindrical tails.

3. Energy reservoir according to Claim 2, characterized by the fact that said pneumatic charging and pressure control connector of each of the pneumatic ends (5) is situated in the axis of said cylindrical tail, and that each of said cylindrical holes in the rear plate (8) is a through hole, the tail or the hole being provided with an annular seal.

4. Energy reservoir according to one of the preceding claims, characterized by the fact it is arranged as a self-supporting assembly mounted on silent-blocks (18,19) permitting its easy installation on the structure of a vehicle.

FIG.1

FIG. 2

FIG. 3